# EUROPEAN PATENT SPECIFICATION

(11) **EP 2 660 583 B1**
(45) Date of publication and mention of the grant of the patent: **25.02.2015**
(21) Application number: 12166157.3
(22) Date of filing: 30.04.2012
(51) Int. Cl.: G01M 15/14, F03D 11/00

(54) **Test rig for a back-to-back test of a turbine**
Testanlage für einen Rücktest einer Turbine
Banc d'essai pour test double face d'une turbine

(43) Date of publication of application: 06.11.2013
(73) Proprietor: Siemens Aktiengesellschaft, 80333 München (DE)
(72) Inventor: Andersen, Christian Buchhave, 8654 Bryrup (DK)

(56) References cited:
- EP-A1- 1 564 405
- US-A1- 2011 041 624

## Description

The invention relates to a test rig for a back-to-back test of a turbine, comprising a generator and a drive motor driving the generator, a shaft coupled to the drive motor and to a surrounding construction for taking a reaction torque created by the driven generator and received by the shaft, and a load cylinder arrangement coupled to the shaft.

When designing or building a turbine or a turbine construction like a wind turbine it is necessary to test the turbine with respective surrounding components in a test surrounding being somehow similar to the surrounding where the turbine is to be installed in order to run the turbine under conditions similar to real working conditions. For test purpose a test rig is used for conducting a back-to-back test of such a turbine. The test rig comprises a generator which generates electric power when being driven for example by rotor blades of a wind turbine, with this generator being mounted to respective construction parts used for mounting the generator at the site wherein it is intended to be used, for example at the top of a tower when using the generator respectively the turbine as a wind turbine. The test rig further comprises a drive motor used for driving the generator, which drive motor simulates the action of for example several rotor blades coupled to the generator. The drive motor can be coupled directly to the generator (like rotor blades are coupled directly to the generator in direct drive turbines) or indirectly via a gear box (like rotor blades being indirectly coupled to the generator via such a gear box in indirect drive turbines).

For simulating the loads exerted by the weight and rotating action of the components driving the generator in reality, for example rotor blades, the test rig furthermore comprises a shaft which is several meters in length and which is coupled to the drive motor and to a surrounding construction, which surrounding construction is for taking a reaction torque created by the driven generator and being received by the shaft. When the drive motor drives the generator a reaction torque is generated by the generator being coupled to the drive motor. This reaction torque must be taken by a surrounding construction based on the ground. Furthermore a load cylinder arrangement is provided, which is coupled to the shaft at the far end of the shaft, which acts as a lever. This load cylinder arrangement, usually comprising two load cylinders, is used to exert yawing and tilting forces to the shaft which is firmly coupled to the drive motor and thus to the turbine construction. These yawing and tilting forces simulate the forces exerted for example by the rotor blades on the turbine and the surrounding construction parts of the turbine like bearings, bed frames etc. The lever-shaft can be moved in horizontal, vertical and any direction between these planes via the load cylinders exerting different forces on the turbine via the stiff connection of the shaft to the turbine.

The surrounding construction for taking the reaction torque according to known prior art comprises a torque arm which is mounted to the end of the shaft close to the drive motor, thus being also directly and firmly mounted to the drive motor. The torque arm projects radially and vertically to the shaft and is fixed to the ground or a pedestal. While the torque arm can take the reaction torque which tends to exert a turning force on the drive motor the known torque arm construction with the single torque arm be vertically arranged and fixed to a holding construction at the ground creates an unwanted yaw force to the device under test based on the reaction force exerted on the torque arm. This yaw force is, by definition, directed to the horizontal and depends on the electric drive torque and is doubled, when the electric drive torque is doubled. This unwanted load being disadvantageously exerted on the turbine falsifies the test and the test results. The forces simulating the real situation are intended to be applied only via the load cylinder arrangement but not in form of any in their concrete value unknown "reaction forces".

EP-1564405 discloses a test bench for wind turbines with a fixed load application means, anchored to the foundation.

Thus it is an object of the invention to provide a new test rig which is able to take the reaction torque without generating any unwanted reaction forces due to the reaction torque taken by the surrounding construction.

For solving the above problem a new test rig is provided, with the surrounding construction comprising two hydraulic cylinders each being coupled to a radial torque arm projecting oppositely to different side from the shaft, each cylinder comprising a first and a second fluid chamber divided from each other by a piston and changing their volume when the shaft is loaded due to receiving a reaction torque, with the first chamber of the first cylinder being coupled to the second chamber of the second cylinder by means of a fluid hose and with the second chamber of the first cylinder being coupled to the first chamber of the second cylinder by means of another fluid hose.

The inventive test rig comprises a double torque arm construction and a respective double cylinders construction, with each cylinder being coupled to one radial torque arm. The torque arms project in a horizontal direction to both sides of the shaft and are coupled to the respective cylinders being positioned in a mainly vertical direction below the respective arm and fixed to the ground or a pedestal. Each cylinder comprises a first and a second chamber filled with a fluid like a hydraulic oil, with the chambers being divided by a piston, while the piston and the housing being movable relative to each other. Respective chambers of the cylinders are coupled via respective fluid hoses in order to allow a communication of the chambers. The first chamber of the first cylinder is coupled to the second chamber of the second cylinders, while the second chamber of the first cylinder is coupled to the first chamber of the second cylinder.

Due to the fact, that the torque arms project opposite to the sides of the shaft and that the respective cylinders are provided on the opposite sides of the shaft the coupled chambers always see the same pressure, what means, that in action, when the reaction torque is to be taken, one coupled chamber pair is the high pressure chamber pair while the other chamber pair is the low pressure chamber pair. When the drive motor runs the generator and the reaction torque is generated, this reaction torque tends to "rotate" the drive motor and the shaft and thus the double torque arm construction around the main axis. Thus one torque arm tends to be lowered due to the exerted torque, while the opposite torque arm tends to be raised due to the exerted torque. This oppositely directed forces are now coupled to the hydraulic cylinders, with the results, that the volumes of the respective coupled chambers are changing. The volume of one chamber pair becomes smaller, while the volume of the other chamber pair becomes greater. Due to the fact, that the respective volumes or chambers and the hoses are in fact closed systems there is no real of significant change in a respective volume but a significant change in the pressure of the hydraulic fluid. That means, that the hydraulic fluid in the first chamber pair and the respective hose is put under high pressure, while the fluid in the other chamber pair and the respective hose is put under a lower pressure. The high pressure fluid or the change in pressure is a result from the reaction torque applied to the double torque arm and the double cylinders construction, with this reaction torque being completely compensate by the double cylinder construction respectively the change in pressure.

Since the respective cylinders are positioned on both sides of the shaft and are simultaneously actuated no yawing force is produced which might influence the test.

According to another aspect of the invention the torque arms are provided at a common arm carrier mounted to the end of the shaft, with preferably the carrier being mounted between the drive motor and the shaft, so that the reaction torque is directly coupled from the drive motor to the arm carrier and the arms and the shaft.

As explained above, the load cylinders arrangement is used for applying yawing and/or tilting forces via the shaft on the turbine. For applying tilting forces it is necessary to raise or lower the shaft in a vertical direction. To avoid that these tilting forces are at least partially taken by the double cylinders construction these two cylinders are variable in their length, when any tilting force is applied by the load cylinder construction. That means, that both torque cylinders are extended or shortened due to the direction of the shaft movement. This is possible, since the respective chambers communicate with one another via the hoses. When the respective cylinders are simultaneously extended or shortened the volume of the respective chambers changes. But in this case both cylinders are either extended or shortened simultaneously, resulting in the fact, that both first chambers simultaneously become smaller or larger and both second chambers simultaneously become larger or smaller. This is different to the volume or pressure change, when the reaction torque is applied, since the reaction torque results in shortening one cylinders while the other cylinders is extended, leading to a little chamber volume change with the coupled chambers becoming simultaneously either smaller or larger which allows the pressure change. A pressure change does not occur when due to a tilting of the shaft both cylinders are simultaneously extended or shortened, since the hydraulic fluid can flow from the chamber of the one cylinder which becomes smaller in volume to the coupled chamber in the other cylinder which becomes larger. Thus no unwanted force is taken or exerted by the double cylinder construction when the load cylinders apply a tilting force on the turbine.

Each hydraulic cylinder of the double cylinder construction comprises in a known manner a cylinder hosing with a piston being movable relative to the hosing. The hosing can be coupled to the torque arm, while the piston is coupled via a rod to the ground, or vice versa. The respective chambers are provided with means for coupling the respective hoses in order to allow a fluid flow respectively a fluid communication resulting in a homogenous pressure distribution between the respective chambers.

According to a further aspect of the invention the cylinders are fixed to a pedestal (ground) and/or the torque arms by means of spherical joints. These joints allow a certain movement of the respective cylinders for following a yawing load exerted by the load cylinders. When the load cylinders are controlled to move the shaft in a horizontal direction also the double arm construction receives a certain horizontal movement. Since both arms are coupled to the cylinders, also the cylinders are moved a little bit. This movement is possible and does not lead to any malfunction or problem, when the cylinders are coupled to the ground and/or the torque arms by the spherical joints allowing them to swivel a little bit.

Another advantage of the double torque arm construction and the double cylinder construction is, that the angle of the torque arms can be controlled within some degrees. Therefore a fluid reservoir and a pumping means is provided for adding or removing fluid to or from the cylinders. This adjustment only has to refill the oil passing the pistons. In normal operation it is not necessary to add or remove any fluid from the cylinders or the hoses, since the pistons completely seal the respective chambers. Nevertheless, due to some leakage, some fluid can pass the pistons and can flow from the high pressure chamber to the low pressure chamber. This would lead to a small change in the respective pressure conditions, while especially the high pressure chambers are responsible for taking the torque load and for maintaining the horizontal position of the torque arms. If due to some oil passing the pistons the respective volumes or oil amount change in the respective high pressure and low pressure parts of the cylinders it is necessary to refill or remove oil, what is easily possible by using a reservoir and respective pumping means for pumping the fluid.

Finally the inventive test rig comprises a further pumping means for maintaining the certain pressure in the hose having the lower pressure, especially when the reaction torque is applied. The pressure in the high pressure chambers and high pressure hose is created by the reaction torque. To make sure that no vacuum is created in the low pressure hose and the low pressure chambers the hose or the chambers are filled by the pumping means (accumulator) from another or the said reservoir in order to maintain a pressure load of several bar, for example 5 bar.

In the following the invention is described in detail as references made to the principal drawings, whereby
- Fig. 1: shows a perspective view of the inventive test rig,
- Fig. 2: shows a side view of the test rig of fig. 1,

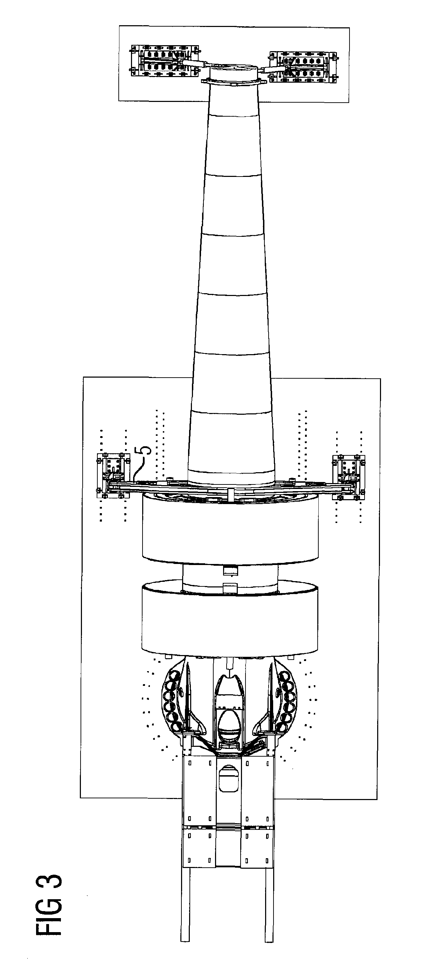

- Fig. 3: shows a top view of the test rig of fig. 1,
- Fig. 4: shows the arm carrier with the two torque arms, and
- Fig. 5: shows a principal drawing of the double torque arm and the double cylinders construction with the communication hoses.

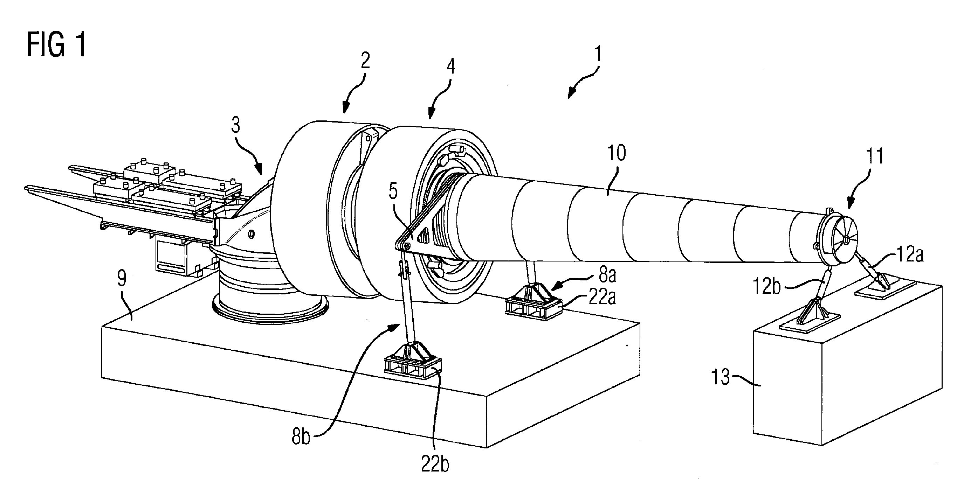

Fig. 1 shows a perspective view of the inventive test rig 1, comprising a generator 2 being mounted to a bed frame 3 not shown in detail, with the construction to be inter alia stress tested comprising further construction parts which are not described in detail.

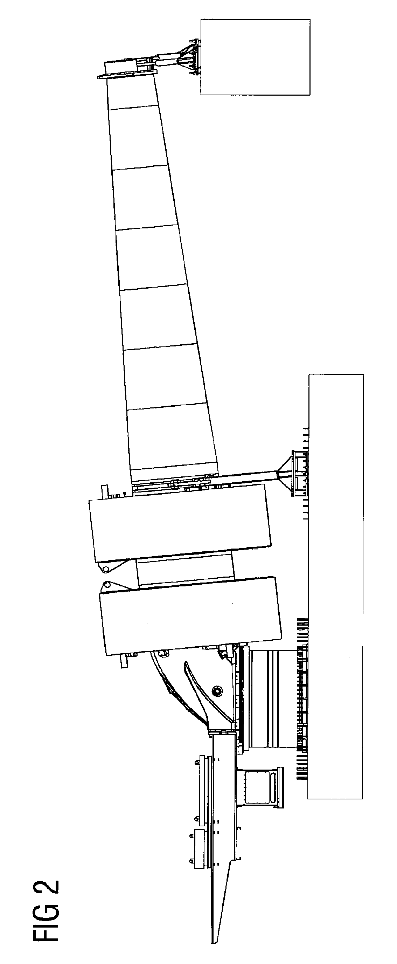

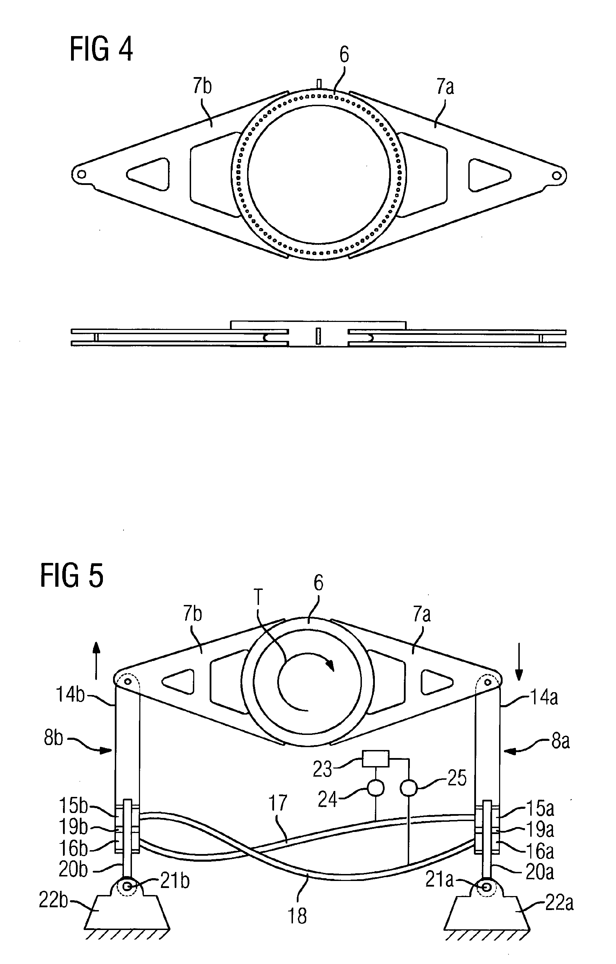

The generator 2 is coupled to a drive motor 4 used for driving the generator 2 to test its performance. An arm carrier 5 comprising a central mounting part 6 (see fig. 4) and two torque arms 7a, 7b extending in opposite directions from the mounting part 6 is mounted to a none rotating part of the drive motor 4, for example the stator of the drive motor 4 or any other hosing part. Each torque arm 7a, 7b is mounted to a respective hydraulic cylinder 8a, 8b (see for example fig. 5), which cylinders are fixed to a pedestal 9. The respective cylinders 8a, 8b are positioned below the respective arms 7a, 7b, see for example fig. 1, 2 and 5. These cylinders 8a, 8b are used for taking a reaction torque, the function is explained in detail below.

As shown in the figure a shaft 10 is coupled to the stator or hosing part of the drive motor 4 respectively the arm carrier 5, with the shaft 10 having a length of several meters depending on the size of the turbine construction to the tested. The free end of the shaft 10 is coupled to a load cylinder arrangement 11 comprising two load cylinders 12a, 12b, which are mounted on another pedestal 13. Each load cylinders 12a, 12b can be controlled separately. They are used for moving the shaft 10 acting as a lever in order to exert any yawing or tilting forces on the drive motor 4 and the generator 2 respectively the complete turbine construction under test. The shaft 10 can be moved in a horizontal and a vertical direction as well as any direction in between. With these load cylinders 12a, 12b forces exerted by common drive means of the generator 2 like rotor blades when the generator 2 is part of wind turbine can be simulated, which forces result from the weight of the rotor blades and their turning action.

The core of the inventive test rig is the double torque arm construction with the double cylinder construction shown in the principal sketch of fig. 5.

Fig. 5 shows the arm carrier 6 with the respective torque arms 7a, 7b. They are fixed with their free ends to the respective cylinders 8a, 8b, for example according to fig. 5 to the respective cylinders hosing 14a, 14b. This can preferably be realised by means of spherical joints.

Each cylinder 8a, 8b comprises a first chamber 15a, 15b and second chamber 16a, 16b. The first chamber 15a of the first cylinder 8a is connected via a hose 17 to the second chamber 16b of the second cylinder 8b, while the second chamber 16a of the first cylinder 8a is connected via hose 18 to the first chamber 15b of the second cylinder 8b. The respective chambers 15a, 15b, 16a, 16b and the hoses 17, 18 are filled with the hydraulic fluid like oil. The chambers are divided by a respective piston 19a, 19b, which in this embodiment is connected via a respective rod 20a, 20b to a respective spherical joint 21a, 21b at a mounting device 22a, 22b, which is fixed to the pedestal 9.

As can be seen, the hoses 17 and 18 allow a communication of the respective chambers coupled via the respective hose. The chamber 15a communicates with the chamber 16b, while the chamber 16a communicates with the chamber 15b. When the drive motor 4 drives the generator 2 an unavoidable reaction torque is exerted from the generator 2 to the motor 4. This reaction torque must be taken or compensated in order to avoid any negative influence on the test measurements and on the forces applied to the turbine construction during the test. This is achieved by means of the double arm and double cylinder construction according to figure 5.

When the drive motor 4 drives the generator 2 the reaction torque is coupled from the drive motor 4 to the arm carrier 6, as shown in figure 5 with the reaction torque being denoted by the arrow signed "T". This reaction torque tends the arm carrier 6 and the respective torque arm 7a, 7b to rotate around on the central axis. This rotational force must be taken or compensated, what is done by the coupled cylinders 8a, 8b, in order to maintain the arms 7a, 7b in their horizontal position. The reaction torque tends the arm 7a to be pressed downward, as shown by the arrow, while the arm 7b tends to be lifted as shown by the other arrow. This results in a certain relative movement of the cylinder housing 14a, 14b relative to the pistons 19a, 19b and thus in a change of the volumes of the respective chambers and finally in a variation of the pressure of the fluid. The arm 7a presses the cylinder housing 14 downward, the arm 7b lifts the cylinder housing 14b. Resulting from this the volumes of the first chamber 15a and the second chamber 16b change simultaneously, they become smaller and the pressure of the fluid in these chambers 15a, 16b and the hose 17 rises. Thus, when the reaction torque is applied, the pressure in the chambers 15a and 16b each obtain "half of the torque". So the reaction torque is completely taken by the fluid in the chambers 15a, 16b and the hose 17. Parallel to this action the volume of the chambers 16a in the first cylinder 8a and the chamber 15b in the second cylinder 8b becomes a little bit larger, the pressure of the fluid in these chambers and the respective hose 18 drops slightly.

The respective pressures in the chambers coupled by the hoses are the same, since the hoses allow a communication of the chambers. Due to the fact, that the arms 7a, 7b project to opposite sides of the shaft 10 and that the torque taking cylinders 8a, 8b are also positioned at the sides of the shaft 10, and due to the fact, that the respective high pressure chambers 15a, 16b of the cylinders 8a, 8b receive the same torque (i.e. the half torque) a complete compensation of the torque is achieved, and no jawing force resulting from taking the torque by the cylinders is unwantedly generated and exerted on the test structure.

Another advantage of the inventive construction is, that this double cylinder construction does not exert any negatively influencing forces on the test structure or does not take any forces exerted by the load cylinder 12a, 12b, which should completely be applied to the test structure when the load cylinder 12a, 12b generate any tilting forces. For generating tilting forces the shaft 10 for example is lowered by the load cylinder 12a, 12b. Since the shaft 10 is coupled to the double arm carrier 6, also the arms 7a, 7b are lowered a little bit. This results in shortening both cylinders 8a, 8b. In the embodiment shown in figure 5 the respective cylinder housing 14a, 14b is lowered relatively to the pistons 19a, 19b. Now the coupled chambers 15a, 16b and 16a, 15b do not simultaneously change their volume in the same direction, as is the case when the reaction torque is applied as explained above, but change their volume oppositely. When both cylinder housings 14a, 14b are for example lowered, the volume of the chamber 15a becomes smaller, while the volume of the coupled chamber 16b becomes larger. The pressure hose 17 allows a fluid flow from the chamber 15a to the chamber 16b, with the pressure being maintained. The same is for the chamber 16a, 15b being coupled via the hose 18. In the example the chamber 16a becomes larger, while the chamber 15b becomes smaller, a fluid flow is possible from the chamber 15b to the chamber 16a via the hose 18. So the fluid coming out of one cylinder chamber is flowing into the other cylinder chamber in the opposite side of the respective piston. So both cylinders 8a, 8b can follow the tilting movement of the shaft and do not exert or absorb any force which is intended to be applied to the device under test by tilting the shaft 10.

The load cylinder 12a, 12b are furthermore used for moving the shaft 10 in a horizontal direction in order to apply jawing forces to the device under test. Any horizontal movement of the shaft 10 results in a horizontal movement of the arm carriers 6 and the respective arm 7a, 7b. Since they are coupled to the cylinders 8a, 8b also the cylinders 8a, 8b move a little bit in a horizontal direction. To allow this movement the respective spherical joints 21a, 21b are provided in order to allow a swivelling of the cylinders 8a, 8b in the joints.

Finally, figure 5 shows a reservoir 23 which is filled with hydraulic fluid. By means of a pumping device 24 it is possible to add or remove hydraulic fluid into or from the hose 17 and thus into the coupled chambers 15a, 16b. This makes it possible to adjust the fluid volume in this closed system, what might be necessary when fluid unwantedly passes the piston and flows from one chamber to the other. Normally the respective pistons 19a, 19b firmly seal the respective chambers, but due to unwanted leakage small amounts of fluid can pass the piston. This can be adjusted by refilling or removing oil from the high pressure system comprising the chambers 15a, 16b and the hose 17.

Furthermore figure 5 shows another pumping device or means 25, which is used for maintaining a certain pressure in the load pressure system comprising the chambers 16a, 15b and the hose 18. This is done to make sure that no vacuum is created in the low pressure hose. The pumping device 25, which acts as an accumulator, can pump fluid from the reservoir 23 into the hose 18 in order to maintain or load a certain pressure, for example 5 bar or more in this low pressure system.

Although figure 5 shows a cylinder arrangement with the cylinder housing 14a, 14b being coupled to the arm 7a, 7b and thus being moveable relative to the fixed pistons 19a, 19b it is clear that the cylinder arrangement can also be vice versa. That means, that is also possible to couple a rod with the respective piston 19a, 19b to the respective arm 7a, 7b and the cylinder housing 14a, 14b via the spherical joints 21a, 21b to the respective mounting device 22a, 22b and further to the pedestal 9. In this embodiment the respective piston 19a, 19b is moveable or loaded by the arms 7a, 7b receiving the reaction torque, leading to a volume respectively a pressure change in the inventive way.

Although the present invention has been described in detail with reference to the preferred embodiment, the present invention is not limited by the disclosed examples from which the skilled person is able to derive other variations without departing from the scope of appended claims.

## Claims

1. Test rig for a back-to-back test of a turbine, comprising a generator and a drive motor driving the generator, a shaft coupled to the drive motor and to a surrounding construction for taking a reaction torque created by the driven generator and received by the shaft, and a load cylinder arrangement coupled to the shaft, **characterized in that** the surrounding construction comprises two hydraulic cylinders (8a, 8b) each being coupled to a radial torque arm (7a, 7b) projecting oppositely to different sides from the shaft (10), each cylinder (8a, 8b) comprising a first and a second fluid chamber (15a, 16a, 15b, 16b) divided from each other by a piston (19a, 19b) and changing their volume when the shaft is loaded due to receiving a reaction torque, with the first chamber (15a) of the first cylinder (8a) being coupled to the second chamber (16b) of the second cylinder (8b) by means of a fluid hose (17) and with the second chamber (16a) of the first cylinder (8a) being coupled to the first chamber (15b) of the second cylinder (8b) by means of another fluid hose (18).

2. Test rig according to claim 1, with the torque arms (7a, 7b) being provided at a common arm carrier (6) mounted to the end of the shaft (10).

3. Test rig according to claim 2, with the arm carrier (6) mounted between the drive motor (4) and the shaft (10).

4. Test rig according to one of the preceding claims, with the cylinders (8a, 8b) being variable in their length due to a tilting force applied via the load cylinder construction (11).

5. Test rig according to one of the preceding claims, with the cylinders (8a, 8b) being fixed to a pedestal (9) and/or the torque arms (7a, 7b) by means of a spherical joint.

6. Test rig according to any of the preceding claims, with a fluid reservoir (23) and a pumping means (24) for adding or removing fluid to or from the cylinders (8a, 8b).

7. Test rig according to any of the preceding claims, with another pumping means (25) for maintaining a certain pressure in the hose (18) having the lower pressure when the reaction torque is applied.

## Patentansprüche

1. Prüfstand für eine Back-to-back-Prüfung einer Turbine, welcher umfasst: einen Generator und einen den Generator antreibenden Antriebsmotor, eine Welle, die mit dem Antriebsmotor und mit einer umgebenden Konstruktion zur Aufnahme eines Reaktionsmoments, das von dem angetriebenen Generator erzeugt und von der Welle aufgenommen wird, gekoppelt ist, und eine mit der Welle gekoppelte Lastzylinderanordnung, **dadurch gekennzeichnet, dass** die umgebende Konstruktion zwei Hydraulikzylinder (8a, 8b) umfasst, die mit je einer radialen Drehmomentstütze (7a, 7b) gekoppelt sind, welche von der Welle (10) aus in entgegengesetzten Richtungen zu verschiedenen Seiten vorstehen, wobei jeder Zylinder (8a, 8b) eine erste und eine zweite Fluidkammer (15a, 16a, 15b, 16b) umfasst, die durch einen Kolben (19a, 19b) voneinander getrennt sind und ihr Volumen ändern, wenn die Welle infolge der Aufnahme eines Reaktionsmoments belastet wird, wobei die erste Kammer (15a) des ersten Zylinders (8a) mit der zweiten Kammer (16b) des zweiten Zylinders (8b) mittels eines Fluidschlauches (17) gekoppelt ist und wobei die zweite Kammer (16a) des ersten Zylinders (8a) mit der ersten Kammer (15b) des zweiten Zylinders (8b) mittels eines anderen Fluidschlauches (18) gekoppelt ist.

2. Prüfstand nach Anspruch 1, wobei die Drehmomentstützen (7a, 7b) an einem gemeinsamen Stützenträger (6) vorgesehen sind, der am Ende der Welle (10) angebracht ist.

3. Prüfstand nach Anspruch 2, wobei der Stützenträger (6) zwischen dem Antriebsmotor (4) und der Welle (10) angebracht ist.

4. Prüfstand nach einem der vorhergehenden Ansprüche, wobei die Zylinder (8a, 8b) infolge einer Kippkraft, die über die Lastzylinderkonstruktion (11) ausgeübt wird, in ihrer Länge variabel sind.

5. Prüfstand nach einem der vorhergehenden Ansprüche, wobei die Zylinder (8a, 8b) an einem Sockel (9) und/oder den Drehmomentstützen (7a, 7b) mittels eines Kugelgelenks befestigt sind.

6. Prüfstand nach einem der vorhergehenden Ansprüche, mit einem Fluidbehälter (23) und einem Pumpmittel (24) zum Zuführen oder Abführen von Fluid zu oder von den Zylindern (8a, 8b).

7. Prüfstand nach einem der vorhergehenden Ansprüche, mit einem weiteren Pumpmittel (25) zum Aufrechterhalten eines gewissen Druckes in dem Schlauch (18), der den niedrigeren Druck aufweist, wenn das Reaktionsmoment ausgeübt wird.

## Revendications

1. Banc d'essai pour un essai back-to-back d'une turbine, comprenant un générateur et un moteur d'entraînement entraînant le générateur, un arbre couplé au moteur d'entraînement et à une construction périphérique permettant d'absorber un couple de réaction créé par le générateur entraîné et reçu par l'arbre, et un arrangement de cylindres de charge relié à l'arbre, **caractérisé en ce que** la construction périphérique comprend deux cylindres hydrauliques (8a, 8b) dont chacun est relié à un bras de couple radial (7a, 7b) saillant sur des côtés différents, opposés, de l'arbre (10), chaque cylindre (8a, 8b) comprenant une première et une seconde chambre de fluide (15a, 16a, 15b, 16b) séparée l'une de l'autre par un piston (19a, 19b) et dont le volume change lorsque l'arbre est chargé du fait de la réception d'un couple de réaction, la première chambre (15a) du premier cylindre (8a) étant couplée à la seconde chambre (16b) du second cylindre (8b) au moyen d'un tuyau de fluide (17) et la seconde chambre (16a) du premier cylindre (8a) étant couplée à la première chambre (15b) du second cylindre (8b) au moyen d'un autre tuyau de fluide (18).

2. Banc d'essai selon la revendication 1, les bras de couple (7a, 7b) étant disposés sur un support de bras (6) commun monté à l'extrémité de l'arbre (10).

3. Banc d'essai selon la revendication 2, le support de bras (6) étant monté entre le moteur d'entraînement (4) et l'arbre (10).

4. Banc d'essai selon l'une quelconque des revendications précédentes, les cylindres (8a, 8b) étant de longueur variable en raison d'une force de pivotement appliquée par le biais de la construction de cylindres de charge (11).

5. Banc d'essai selon l'une quelconque des revendications précédentes, les cylindres (8a, 8b) étant fixés sur un socle (9) et /ou aux bras de couple (7a, 7b) au moyen d'une articulation à rotule.

6. Banc d'essai selon l'une quelconque des revendications précédentes, un réservoir de fluide (23) et un moyen de pompage (24) permettant d'amener ou de retirer un fluide aux/des cylindres (8a, 8b).

7. Banc d'essai selon l'une quelconque des revendications précédentes, un autre moyen de pompage (25) permettant de maintenir une certaine pression dans le tuyau (18) ayant la pression la plus faible lorsque le couple de réaction est appliqué.
